# EUROPÄISCHE PATENTSCHRIFT

(11) **EP 4 088 043 B1**
(45) Veröffentlichungstag und Bekanntmachung des Hinweises auf die Patenterteilung: **06.03.2024**
(21) Anmeldenummer: 21700380.5
(22) Anmeldetag: 07.01.2021
(51) Int. Cl.: F16G 13/16

(54) **KUNSTSTOFF-BAUTEILE FÜR ENERGIEFÜHRUNGSKETTEN MIT INTEGRIERTER SENSORIK**
PLASTIC COMPONENTS FOR CABLE CARRIERS WITH INTEGRATED SENSOR SYSTEM
COMPOSANTS EN PLASTIQUE POUR SUPPORTS DE CÂBLES AVEC SYSTÈME DE CAPTEUR INTÉGRÉ

(30) Priorität: 10.01.2020 DE 202020100143 U
(43) Veröffentlichungstag der Anmeldung: 16.11.2022
(73) Patentinhaber: Igus GmbH, 51147 Köln (DE)
(72) Erfinder: HABERING, Richard, 51143 Köln (DE)
(74) Vertreter: Lippert Stachow Patentanwälte Rechtsanwälte
(86) Internationale Anmeldenummer: PCT/EP2021/050202
(87) Internationale Veröffentlichungsnummer: WO 2021/140162

(56) Entgegenhaltungen:
- DE-A1-102016 006 061
- DE-U1-202016 000 501
- DE-U1-202016 102 133
- DE-U1-202018 100 339
- DE-U1-202018 101 942
- DE-U1-202018 105 755
- DE-U1-202019 104 826
- SIMON J. LEIGH ET AL: "A Simple, Low-Cost Conductive Composite Material for 3D Printing of Electronic Sensors", PLOS ONE, Bd. 7, Nr. 11, 21. November 2012 (2012-11-21), Seite e49365, XP055088994, DOI: 10.1371/journal.pone.0049365 in der Anmeldung erwähnt

## Beschreibung

Die Erfindung betrifft allgemein das Gebiet der Energieführungsketten, zur geschützten, dynamischen Führung von Versorgungsleitungen wie Kabeln, Schläuchen und dergleichen zwischen einer ersten Anschlussstelle und einer dazu relativbeweglichen zweiten Anschlussstelle.

Die Erfindung betrifft speziell einerseits ein Bauteil einer Energieführungskette, insbesondere ein Bauteil eines Kettenglieds wie z.B. eine Kettenlasche, und andererseits ein Führungsbauteil, insbesondere eine Gleitschiene, für eine Führungsrinne für Energieführungsketten. Die Erfindung kann insbesondere aber nicht ausschließlich in Leitungsführungsanordnungen, die hohe Verfahrgeschwindigkeiten und/oder lange Fahrwege der Energieführung erfordern, angewendet werden.

Energieführungsketten umfassen typisch gelenkig verbundene Kettenglieder und sind meist aus zwei Strängen schwenkbar miteinander verbundener Kettenlaschen aufgebaut, wobei die Laschenstränge in einer Querrichtung durch Querstege an jeweils zwei gegenüberliegenden Kettenlaschen voneinander beabstandet und miteinander verbunden sind.

Eine Leitungsführungsanordnung kann, insbesondere bei langen Fahrwegen, eine Führungsrinne zum Führen der Energieführungskette umfassen, in der die Energieführungskette geführt ist. In der Führungsrinne sind meist besondere Führungsbauteile vorgesehen, wie bspw. Gleitschienen oder Gleitleisten, um die Reibung zu reduzieren, d.h. damit verbunden auch die auf die Energieführungskette wirkenden Kräfte und auch um reibungsbedingten Verschleiß der Energieführungskette, insbesondere bei gleitenden Anwendungen, zu reduzieren.

Mit fortschreitender Nutzungsdauer von Energieführungsketten, insbesondere bei hohen Verfahrgeschwindigkeiten und/oder langen Fahrwegen, kommt es zu Verschleiß. Nicht rechtzeitig erkannter kritischer Verschleiß eines Kettenglieds, insbesondere einer Kettenlasche, kann bspw. zu einem Bruch der Energieführungskette führen. Auch bei Führungsbauteilen einer Führungsrinne kann übermäßiger Verschleiß eine Betriebsstörung zur Folge haben bzw. zu Schaden an der Energieführungskette führen.

Um ein Versagen der Energieführungskette und resultierenden Folgeschäden wie Schäden an geführten Leitungen und/oder Produktionsausfall der versorgten Maschine bzw. Anlage vorzubeugen, sollte kritischer Verschleiß frühzeitig erkannt werden um abgenutzte Bauteile rechtzeitig zu erneuern.

Ein gattungsgemäßes Bauteil einer Energieführungskette umfasst ein aus Kunststoff gefertigtes Formteil. Entsprechendes gilt auch für Führungsbauteile der Führungsrinnen. Aus Kunststoff hergestellte Komponenten von Leitungsführungssystemen unterschiedlicher Bauweisen sind seit langem bekannt, am Markt bewährt und bspw. von der Firma igus GmbH, D-51147 Köln erhältlich.

Kettenglieder und Gleitschienen aus Kunststoff bieten neben Gewichtseinsparung diverse Vorteile gegenüber konventionellen Lösungen mit Metallteilen. Eine Verschleißüberwachung ist allgemein und besonders bei Kunststoffteilen wünschenswert. Daneben ist es ganz grundsätzlich wünschenswert, relevante Bauteile mit Sensorfunktionen auszurüsten, welche eine verbesserte Überwachung, nicht nur aber insbesondere zwecks vorbeugender Wartung (predictive maintenance) ermöglichen. Für Energieführungsketten sind Kettenlaschen bekannt, die mit einer elektrischen Funktionsschaltung mit Sensorfunktion an dem aus Kunststoff gefertigtem Formteil ausgerüstet sind, zur Erfassung von übermäßigem Verschleiß.

Eine derartige Kettenlasche ist bspw. aus EP 1 521 015 A2 vorbekannt. Die Funktionsschaltung nach EP 1 521 015 A2 umfasst ein Federkontaktelement, das in einer Kammer in der Kettenlasche kraftschlüssig gehalten ist. Das Federkontaktelement ist durch eine elektrische Leitung an einen Stromkreis angeschlossen. Eine Wand der Kammer ist an einer verschleißanfälligen Stelle der Kettenlasche angeordnet und weist eine Sollbruchstelle auf. Ein Abnutzen der Wand führt zum Bruch an der Sollbruchstelle, zum Öffnen des Federkontakts und zur Unterbrechung des Stromkreises. Dieses System besteht somit aus mehreren mechanischen und elektrischen Komponenten und erfordert eine komplexe Herstellung.

In WO 2017/129805 A1 (FIG.9A-9B) beschreibt die Anmelderin das Anbringen eines separaten Moduls mit elektrischer Schaltung zur Verschleißerkennung, nämlich einer Funkschaltung mit Detektorelement, z.B. in einer Aussparung an einer Kettenlasche die anschließend verschlossen wird. Auch hierbei ist die Herstellung relativ aufwendig und eine geeignete Aufnahme für das Modul erforderlich.

Weitere Sensoriken für Kettenglieder von Energieführungsketten wurden in WO 2019/201482 A1 vorgeschlagen. Auch hierbei wäre eine vereinfachte, günstigere Integration in den Herstellungsprozess wünschenswert. Eine erste Aufgabe der vorliegenden Erfindung besteht mithin darin, Bauteile die in oder mit Energieführungsketten verwendet werden, insbesondere eine Kettenlasche eines Kettenglieds oder auch eine Gleitschiene einer Führungsrinne, vorzuschlagen, die mit einer elektrischen Funktionsschaltung zur sensorischen Erfassung eines Betriebsparameters ausgerüstet sind, und auch in großen Stückzahlen kostengünstig und zuverlässig herstellbar **sind.** Weitere Kettengliedern wurden in DE202019104826U1 und DE202018100339U1 vorgeschlagen.

Die Lösung soll dabei gleichermaßen für Bauteile von Energieführungsketten an sich, insbesondere deren Kettengliedern, z.B. Kettenlaschen und Querstege, oder auch für Führungsbauteile von Führungsrinnen, insbesondere Gleitschienen, geeignet sein.

Diese Aufgabe wird z.B. gelöst durch ein Bauteil mit den Merkmalen nach Anspruch 1. Vorteilhafte Ausführungsformen sind Gegenstand der abhängigen Ansprüche.

Zur Lösung dieser ersten Aufgabe wird bei einem Energieführungsketten-Bauteil, insbesondere einer Kettenlasche, nach dem Oberbegriff aus Anspruch 1 vorgeschlagen, dass die Funktionsschaltung mindestens eine Leiterbahnstruktur umfasst, die auf dem Formteil aus Kunststoff der Leiterbahnstruktur ausgebildet ist, wobei das Formteil selbst den Träger bzw. das Substrat für die Leiterbahnstruktur bildet. Die Funktionsschaltung kann insbesondere durch ein additives Fertigungsverfahren auf dem vorzugsweise vorgefertigten Formteil aufgebracht (Engl.: applied) sein.

Ein gattungsgemäßes Führungsbauteil für eine Führungsrinne eines Leitungsführungssystems, insbesondere eine Gleitschiene, oder evtl. auch eine Gleitleiste, umfasst ebenfalls typisch ein aus Kunststoff gefertigtes Formteil mit einer Gleitfläche für eine in der Führungsrinne geführte Energieführungskette. Zur Lösung der o.g. ersten Aufgabe wird also bei einem Führungsbauteil nach dem Oberbegriff aus Anspruch 2 ebenfalls vorgeschlagen, an dem Formteil mindestens eine elektrische Funktionsschaltung mit Sensorfunktion zur Erfassung eines Betriebsparameters anzuordnen, welche mindestens eine Leiterbahnstruktur umfasst, die auf dem Formteil der Leiterbahnstruktur ausgebildet ist, sodass der Formteil zugleich als Träger der Leiterbahnstruktur dienen kann. Hierzu kann die Funktionsschaltung insbesondere durch ein additives Fertigungsverfahren auf dem vorzugsweise vorgefertigten Formteil aus Kunststoff aufgebracht (Engl.: applied) sein.

Die vorgeschlagene Lösung lässt sich somit nicht nur für die Herstellung von Strukturbauteilen der Kettenglieder, d.h. insbesondere Kettenlaschen (auch Seitenlaschen bzw. Seitenteile genannt) und diese verbindende Querstege (auch Traversen oder Öffnungssteg genannt) anwenden, sondern analog auch für diejenigen Bauteile einer an sich optionalen Führungsrinne, welche mit den Kettengliedern zusammenwirken.

In beiden Fällen hat die vorgeschlagene Bauweise u.a. den Vorteil, dass preiswert herstellbare Sensorik mit den gewünschten Eigenschaften unmittelbar in die Formteile integriert werden kann, d.h. der Automatisierungsgrad erhöht wird bzw. zusätzliche Fertigungsschritte entfallen.

Unter Leiterbahn (Engl. "trace conductor") wird vorliegend ein einzelnes elektrisch leitendes Verbindungselement verstanden mit beliebiger Länge bei vorgegebener Breite und vorgegebener Dicke (Bauhöhe), wobei die Dicke der Leiterbahn im Verhältnis zu ihrer Breite deutlich kleiner ist, insbesondere um mindestens einen Faktor zwei, üblicherweise um ca. eine Größenordnung. Es handelt sich also um Verbindungselemente, typisch in flächiger Bauweise, mit Geometrien, ähnlich Leiterbahnen die bei Leiterplatten (Engl. "printed circuit board") üblich sind.

Das Formteil kann insbesondere vorgefertigt sein, bzw. bereits vor dem Aufbringen der Leiterbahnstruktur bzw. der Funktionsschaltung in geeigneter Form vorliegen und somit als Schaltungsträger bzw. Substrat genutzt werden. Herkömmliche Leiterplatten bzw. PCBs sind damit nicht erforderlich.

Die erfindungsgemäße Leiterbahnstruktur kann durch unterschiedliche Techniken aufgebracht (Engl. applied) werden, bspw. durch Auftragen eines Leitlacks auf das vorgefertigte Formteil hergestellt sein und/oder auf dem Formteil bspw. durch 3D-Druck aufgedruckt sein. Bevorzugt wird die gesamte Funktionsschaltung, zumindest aber die Leiterbahnstruktur, direkt bzw. unmittelbar auf das vorgefertigte Kunststoff-Formteil aufgebracht, insbesondere aufgedruckt.

Die Funktionsschaltung kann bspw. durch ein additiv metallisierendes Verfahren auf das Formteil aufgebracht werden, indem ein Metall auf einen metallisierbaren Kunststoff galvanisch aufgebracht wird, oder auch durch thermisches Auftragen z.B. Spritzen.

Die erfindungsgemäße Funktionsschaltung kann allgemein durch ein additives Fertigungsverfahren auf das Formteil aus Kunststoff aufgebracht bzw. aufgetragen sein.

Dies kann insbesondere mithilfe einer geeigneten MID-Technologie (Engl. Molded Interconnect Devices) erfolgen.

Die Funktionsschaltung kann auch durch andere geeignete, an sich bekannte AM-Verfahren angebracht werden, insbesondere durch ein im Sinne der Norm VDI 3405 oder DIN EN ISO 17296-2 (Teil II) als additives Fertigungsverfahren bezeichnetes Verfahren.

AM-Verfahren erlauben inhärent automatisierte, computergestützte Fertigung von komplexen, quasi beliebigen Geometrien, typisch auf Basis einer schichtweise aufgetragenen Konstruktion. Als AM-Verfahren kommen insbesondere Direkt-Druck mit selbsttätiger Aushärtung der Druckmasse oder auch 3D-Druck durch Polymerisation, 3D-Druck durch Verkleben und 3D-Druck durch Sintern/Verschmelzen in Betracht.

Die Funktionsschaltung kann dabei vollständig bzw. integral, insbesondere ohne sonstige diskrete elektrische Komponenten, in einem zusammenhängenden additiven Fertigungsprozess hergestellt sein. Geeignet sind dazu insbesondere extrusionsbasierte Verfahren (englisch: extrusion based: EB), entweder mit chemischer Aushärtung oder mit physikalischer Verfestigung von erhitzten thermoplastischen Kunststoffen. Geeignet erscheint z.B. das FDM-Verfahren (englisch: fused deposition modeling). Auch denkbar sind MJ-Verfahren (englisch: material jetting), z.B. mit Photopolymeren die durch Lichteinwirkung verfestigten. Ebenfalls in Betracht kommen sog. BJ-Verfahren (englisch: binder jetting), gelegentlich auch als 3DP-Verfahren bezeichnet.

In Betracht kommen grundsätzlich alle sogenannte 3D-Drucktechniken. Bevorzugt sind EB-Verfahren aufgrund ihrer Eignung für relativ zähflüssige, leitfähige Pasten. Insbesondere ein FLM- bzw. ein FFF-Verfahren zur additiven Fertigung wird bevorzugt.

Das Formteil kann insbesondere im Spritzgussverfahren hergestellt werden.

Die Funktionsschaltung kann auch durch In-Mold-Labeling aufgebracht werden, bzw. durch Einlegen einer bedruckten Folie in ein Spritzgießwerkzeug und Hinterspritzen mit dem Kunststoff. Die Funktionsschaltung kann ferner durch Heißprägen (Aufbringen einer haftenden Folie unter Druck und Wärme) angebracht werden.

Unter Funktionsschaltung wird auch ein Fragment eines Schaltkreises (Engl. "circuit") verstanden. Die Funktionsschaltung kann insbesondere erst durch Verbindung mit einer weiteren Schaltung ihre eigentliche Funktion erfüllen und muss daher für sich insbesondere keinen Stromkreis bilden. Die Funktionsschaltung kann z.B. einen elektrischen Zweipol bilden, dessen elektrische Eigenschaften von dem zu erfassenden Betriebsparameter abhängen.

Das Formteil kann vor dem Aufbringen der Funktionsschaltung bereits vorgefertigt sein, insbesondere einteilig vorgefertigt, bspw. aus einem faserverstärkten Polymer.

Denkbar ist es auch, eine Zwischenschicht zwischen dem Formteil und der additiv aufgedruckten bzw. aufgetragenen Funktionsschaltung vorzusehen, etwa zur Haftungsvermittlung oder zwecks zusätzlicher elektrischer Isolierung.

Die Leiterbahnstruktur bzw. die Funktionsschaltung kann auf dem Formteil ausgebildet sein, insbesondere an einer Oberfläche des Formteils. Die Leiterbahnstruktur bzw. die Funktionsschaltung muss nicht von der Oberfläche der fertigen Vorrichtung - der Kettenlasche bzw. des Führungsbauteils - direkt zugängig sein, sie kann in der fertigen Vorrichtung durch eine oder mehrere Schutzschichten bedeckt bzw. ummantelt sein. Die Ummantelung kann bspw. durch Umspritzen hergestellt sein. Vorzugsweise wird bei drahtgebundener Signalverbindung zwecks Kontaktierung eine Zugangsöffnung zur Schaltung freigelassen bzw. ausgespart oder aber eine Kontaktvorrichtung mit eingekapselt.

Ein Vorteil der erfindungsgemäßen Lösung ist die relativ günstige Herstellung bei dennoch robuster Bauweise, die auch für widrige Umgebungsbedingungen, wie z.B. Verwendung im Freien geeignet ist.

Das Formteil dient als Substrat bzw. Schaltungsträger für die additiv aufgebrachte Funktionsschaltung, vorzugsweise als spritzgegossener Schaltungsträger.

Das Formteil kann ein Thermoplast umfassen oder im Wesentlichen aus einem Thermoplast hergestellt sein. Thermoplastische Werkstoffe eignen sich besonders gut, u.a. zum Recycling. Dem Kunststoff können ggf. auch Metallverbindungen beigemischt sein, was z.B. für die LDS Herstellmethode für MIDs vorteilhaft ist.

Erfindungsgemäß ist die Funktionsschaltung durch eine stoffschlüssige Verbindung fest mit dem Formteil verbunden. Die Funktionsschaltung ist in das Formteil integriert bzw. liegt nach der Herstellung als integraler Bestandteil des Formteils vor.

Die Funktionsschaltung kann einen Detektionsbereich umfassen, der zwecks Sensorfunktion bezüglich des zu überwachenden Betriebsparameters sensitiv ist. Als Detektionsbereich kommt grundsätzlich eine beliebige Detektionskomponente bzw. Detektorstruktur in Betracht, die vorzugsweise integral während der additiven Fertigung der Funktionsschaltung hergestellt wird.

Es kann sich dabei insbesondere um einen resistiven Detektionsbereich zur Verschleißerkennung, z.B. durch Leitungsunterbrechung, handeln. Auch induktiv oder kapazitiv wirkende Funktionsschaltungen z.B. zur Näherungserkennung oder dgl. liegen im Rahmen der Erfindung. Denkbar sind ferner auch andere Detektionskonzepte, beispielsweise zur Temperaturmessung oder zur Verformungs- bzw. Kraftmessung.

Mit Detektionsbereich ist insbesondere der Aufnehmer im Sinne der Messtechnik (vgl. DIN 1319-1) bezeichnet, d.h. der Teil der Einrichtung, der auf die gewünschte Messgröße bzw. zu erfassende Größe unmittelbar anspricht.

Die Funktionsschaltung kann, insbesondere zur Vereinfachung der additiven Fertigung, an einer Oberfläche des Formteils aufgebracht bzw. vorgesehen sein, insbesondere in die Oberfläche integriert sein. Die endfertige Funktionsschaltung kann in einer an der Oberfläche des Formteils vorgefertigten Aussparungsstruktur zumindest teilweise oder bevorzugt vollständig einliegen bzw. eingelassen sein. Mit einer im Spritzgussverfahren mit geringen Toleranzen herstellbaren Aussparungsstruktur, können Ungenauigkeiten additiver Fertigung, z.B. durch Zerfließen des noch nicht ausgehärteten Leitermaterial reduziert bzw. kompensiert werden.

Das vorzugsweise vollständige Aufnehmen der Funktionsschaltung in einer oberseitigen Aussparungsstruktur bietet u.a. den Vorteil, dass eine mit Sensorfunktion erweiterte Vorrichtung weiterhin abwärtskompatibel zur Bauteilgeometrie einer bestehenden bzw. bereits in Serie gefertigten Vorrichtung bleibt.

Die Aussparungsstruktur kann nach additiver Fertigung der Funktionsschaltung nach Außen zur Oberfläche hin offenbleiben, oder zum besseren Schutz, z.B. gegen Umwelteinflüsse, anschließend gekapselt werden, ggf. im Rahmen einer geeigneten additiven Fertigungstechnik.

Bei einer Ausführungsform der Kettenlasche kann das Formteil eine Gleitfläche zum gleitenden Zusammenwirken mit einer Gegenfläche einer relativ zur Kettenlasche bewegten Komponente eines Leitungsführungssystems aufweisen, insbesondere einer weiteren Kettenlasche und/oder einem Führungsbauteil einer Führungsrinne.

Bei einer verbreiteten und an sich bekannten Energieführungskette überlappen jeweils zwei aufeinanderfolgende Kettenlaschen eines Laschenstrangs an ihren Längsenden teilweise miteinander und sind schwenkbar miteinander durch eine Gelenkverbindung verbunden. Diese Überlappungsbereiche der Kettenlaschen können Gelenkzapfen und/oder Gelenkaufnahmen zur Bildung dieser Gelenkverbindung aufweisen. Der Gelenkzapfen einer Kettenlasche kann dabei in einer Gelenkaufnahme einer überlappenden Kettenlasche aufgenommen werden. Beim Schwenken der Kettenlaschen um eine Schwenkachse gegeneinander gleiten diese Gleitpartner aneinander was unweigerlich zu Verschleiß führt.

Kettenlaschen können auch andere Gleitflächen aufweisen, bspw. wenn ein Vorsprung einer Kettenlasche in einer Nut einer überlappenden Kettenlasche zur seitlichen Stabilisierung der Gelenkverbindung aufgenommen ist.

Ferner hat eine Kettenlasche an ihren Schmalseiten typisch die vorgenannten Gleitflächen zum Abgleiten an weiteren Kettenlaschen oder an einer Gleitschiene. Ebenfalls im Rahmen der Erfindung liegt die Anwendung an sogenannten Gleitschuhen für Energieführungsketten, welche als separate Formteile an den Schmalseiten montiert werden um Reibung bei langen Verfahrwegen zu vermindern. Auch solche Gleitschuhe werden als Bauteile im vorliegenden Sinne verstanden, welche vorteilhaft mit einer Funktionsschaltung ausgerüstet werden können.

Der Detektionsbereich der Funktionsschaltung kann zumindest in einem Neuzustand der Vorrichtung einen vordefinierten Abstand zur Gleitfläche des Formteils aufweisen. Der Detektionsbereich kann allgemein in einer vordefinierten Position an dem Formteil angeordnet sein.

Der Detektionsbereich kann insbesondere auf einer der Gleitfläche gegenüberliegenden Oberfläche des Formteils vorgesehen sein.

Bei einer Ausführungsform kann der Detektionsbereich zumindest teilweise entlang einer zu erkennenden Verschleißgrenze verlaufen bzw. zumindest im Neuzustand der Vorrichtung einen Abstand zur eigentlichen Gleitfläche aufweisen, der einer zulässigen Abnutzung der Gleitfläche entspricht, sodass ein Überschreiten der Verschleißgrenze bzw. der zulässigen Abnutzung durch die Funktionsschaltung detektierbar ist. So kann die Vorrichtung rechtzeitig ausgetauscht werden, bevor es zum Versagen kommt.

Das Formteil kann eine vorgefertigte Vertiefung aufweisen, in welcher die Funktionsschaltung zumindest teilweise oder vollständig einliegt.

Die Funktionsschaltung ist direkt und/oder integral auf das vorgefertigte Formteil aufgetragen, insbesondere durch ein MID-Verfahren.

Die Funktionsschaltung ist mit dem Formteil durch eine stoffschlüssige Verbindung verbunden.

Die Funktionsschaltung ist vorzugsweise aus einem Material gefertigt, das eine deutlich höhere Leitfähigkeit aufweist, als der Kunststoff des Formteils, insbesondere aus einem Material mit Silber-, Kupfer- und/oder Carbon-Anteil. So kann die Funktionsschaltung direkt auf dem Formteil aufgetragen sein, auch ohne zusätzliche Isolierschichten zwischen dem Körper des Formteils und der Leiterbahnstruktur der Funktionsschaltung.

Zur Herstellung elektrisch leitfähiger Strukturen im Wege der additiven Fertigung sind bereits unterschiedliche Materialien bekannt. Es können beispielsweise druckbare Pasten, Flüssigkeiten oder Thermoplaste mit Silberanteil, Kupferanteil und/oder Carbonanteil (beispielsweise Graphit oder Industrieruß bzw. CB = "Carbon Black") eingesetzt werden. Vorzugsweise wird eine silberbasierte, leitfähige Paste eingesetzt, wie beispielsweise ein Flüssigharz mit Silberpulver, wie z.B. Typ 5064H der Fa. DuPont^{®} vom (siehe Datenblatt MCM5064H/2011). Auch andere Mischungen einer Polymermatrix mit leitfähigen Partikeln, insbesondere preiswertere Carbon-Partikel (Graphit oder CB) kommen in Betracht, sofern das endfertige Material der Leiterbahnen der Funktionsschaltung eine deutlich höhere Leitfähigkeit aufweist, als der Kunststoff bzw. Tribopolymer des Schaltungsträgers.

Die Funktionsschaltung umfasst Leiterbahnen, die vorzugsweise durch ein AM-Verfahren additiv aufgebracht sind und insbesondere eine Schichtstärke bzw. Dicke von ≤200µm, vorzugsweise von ≤100µm, bspw. im Bereich von 5-50pm, und vorzugsweise eine Leiterbreite von 0,5-5mm aufweisen. Die Leiterbahnen können insbesondere als Detektionsbereich dienen.

Die Funktionsschaltung kann ferner besondere Kontaktbereiche zur lösbaren Kontaktierung der Funktionsschaltung, bspw. mit einer separaten Auswerteschaltung oder einer Energiequelle, aufweisen, die durch dasselbe additive Fertigungsverfahren auf das Formteil aufgebracht sind wie die Leiterbahnstruktur der Detektionsbereiche. Die Kontaktbereiche weisen vorzugsweise eine Schichtstärke bzw. Dicke von ≥200µm, insbesondere im Bereich von 250-500µm auf.

Die additiv gefertigte Funktionsschaltung ist vorzugsweise rein passiv, d.h. ohne eigene Energiequelle ausgeführt. Sie kann insbesondere als Zweipol ausgeführt sein, der an eine separate Auswerteschaltung über die Kontaktbereiche anzuschließen ist. Die Funktionsschaltung kann insbesondere ausschließlich aus Leiterbahnen als Detektionsbereich und den Kontaktbereichen bestehen bzw. ohne diskrete elektrische bzw. elektronische Komponenten ausgeführt sein. Auch diese besonders einfache Gestaltung erlaubt z.B. eine resistive Verschleißerkennung, insbesondere durch resistive Überwachung einer Unterbrechung der Leiterbahnstruktur im Detektionsbereich der Funktionsschaltung.

Im Rahmen der additiven Fertigung können jedoch auch andersartige Detektionsbereiche bzw. Sensoren im Sinne von Messgrößen-Aufnehmern hergestellt werden. So kann beispielsweise auch eine kapazitive oder temperaturempfindliche Sensorstruktur additiv aufgebracht werden. Auch piezo-resistive Strukturen wurden bereits in der jüngeren Fachliteratur zu AM-Verfahren beschrieben. Ein piezo-resistiver Detektor der im AM-Verfahren herstellbar ist, wurde beispielsweise von Leigh SJ, Bradley RJ, et al. ("A Simple, Low-Cost Conductive Composite Material for 3D Printing of Electronic Sensors"; PLoS ONE 7(11); 2012).

Ein Detektionsbereich kann insbesondere der Detektion einer Positionsänderung der Vorrichtung zu einer relativ zur Vorrichtung bewegenden weiteren Vorrichtung bzw. Komponente eines Leitungsführungssystems dienen. In Betracht kommt dabei z.B. die Erfassung des Schwenkwinkels zweier zueinander schwenkbarer Kettenglieder, oder die Positionserfassung der Energiekette z.B. über die Relativposition eines Endbereichs zum stationären Trum oder relativ zur Führungsrinne, usw.

Im Rahmen der Erfindung liegt allgemein erfindungsgemäß hergestellte Sensorik für die Betriebsüberwachung bzw. die Erfassung jeglicher Betriebsparameter, insbesondere solcher, die für die Lebensdauer relevante Daten darstellen.

Bei einer besonders für Führungsbauteile von Führungsrinnen vorteilhaften Ausführungsform der Vorrichtung bzw. des Führungsbauteils umfasst das Formteil ein Tribopolymer - einen tribo-optimierten Kunststoff, und ist insbesondere aus einem Tribopolymer vorgefertigt. Tribopolymere zur schmiermittelfreien Lagerung sind an sich bekannt und umfassen typischerweise ein Basispolymer und mikroskopische Festschmierstoffe. Weiterhin kann das Tribopolymer Verstärkungsfasern und/oder Verstärkungsfüllstoffe oder sonstige Füllstoffe aufweisen. Diese Art von Vorrichtungen bzw. Führungsbauteilen ist bestimmungsgemäß einem gewissen Verschleiß des Basispolymers ausgesetzt, der die festen Schmierstoffpartikel zur Feststoffschmierung mit dem Lagerpartner freisetzen soll. Dementsprechend ist eine Verschleißerkennung hier besonders vorteilhaft, welche sich günstig im additiven Fertigungsverfahren realisieren lässt. Tribologisch optimierte Polymere (Tribopolymer) können insbesondere für Gleitschienen oder Gleitschuhe eingesetzt werden. Ein hierfür geeigneter Werkstoff ist z.B. ein Polymer aus der Produktreihe iglidur^{®} der Firma igus GmbH, D-51147 Köln.

Für Kettengliedern oder Kettenlaschen besonders geeignet ist ein abriebfestes Polymer aus der Produktreihe igumid^{®} der Firma igus GmbH, D-51147 Köln. Auch Teile von Kettengliedern oder Kettenlaschen können jedoch aus einem anderen, tribologisch optimierten Polymer bzw. einem Tribopolymer hergestellte Bereiche umfassen.

Ein Führungsbauteil gemäß einer der beschriebenen Ausführungsformen kann somit eine Gleitschiene mit einem in eine Längsrichtung langgestrecktem Körper und einem offenen Querschnitt senkrecht zur Längsrichtung sein. Die Längsrichtung eines Führungsbauteils entspricht der Längsrichtung der Führungsrinne bzw. der Fahrrichtung der Energieführungskette. Die Gleitschiene kann insbesondere als Winkelprofil ausgebildet sein. Der Vorteil solcher Gleitschienen ist es, dass sie günstig im Spritzgussverfahren hergestellt werden können. Ein offener Querschnitt erlaubt zudem ein Aufbringen von Funktionsschaltungen an einer Oberfläche des Formteils, die der Gleitfläche gegenüberliegt bzw. abgewandt ist.

Das Führungsbauteil kann eine Mehrzahl Funktionsschaltungen aufweisen, die in der Längsrichtung des Führungsbauteils voneinander beabstandet sind. Die Funktionsschaltungen können insbesondere zum Überwachen der Position bzw. des Verfahrens der Energieführungskette entlang des Verfahrwegs dienen, insbesondere, wenn sie als ein induktiver, kapazitive oder piezo-resistiver Schalter funktionieren. Die Funktionsschaltungen können über eine gesamte Länge des Führungsbauteils oder über einen Abschnitt des Führungsbauteils verteilt sein.

Das Führungsbauteil umfasst vorzugsweise einen Befestigungsbereich zur Befestigung des Führungsbauteils an der Führungsrinne. Eine Führungsrinne für Energieführungsketten weist üblicherweise Seitenteile auf, die in einer Querrichtung senkrecht zur Längsrichtung der Führungsrinne voneinander beabstandet sind, und einen Rinnenboden zwischen den Seitenteilen. Insbesondere die Seitenteile können dabei aus Metall gefertigt sein, z.B. aus Aluminium oder Stahlblech. Die Seitenteile und/oder der Rinnenboden können Auflageflächen für die Energieführungskette bereitstellen, an denen die Energieführungskette verfahren, insbesondere abgleiten, kann. Diese Auflageflächen können Gleitschienen aufweisen. Die Seitenteile können Gleitleisten aufweisen, die mit den Breitseiten der Kettenlaschen einer Energieführungskette, die in der Rinne verfährt, zusammenwirken.

Beim Verfahren der Energieführungskette in der Führungsrinne können die Breitseiten der Kettenlaschen in Kontakt mit der Gleitleiste kommen und an dieser abgleiten. Der Befestigungsbereich kann Profilelemente zur Befestigung des Führungsbauteils, bzw. der Gleitschiene und/oder der Gleitleiste, an einem Seitenteil der Führungsrinne aufweisen, wobei das Seitenteil ein zum Befestigungsbereich des Führungsbauteils passendes Profil aufweist.

Die Erfindung betrifft jedoch insbesondere Kunststoff-Formteile, die Bestandteile einer Energieführungskette an sich sind.

Eine Kettenlasche gemäß einer der beschriebenen Ausführungsformen weist z.B. typischerweise zwei Breitseiten und vier Schmalseiten, wobei mindestens eine der Schmalseiten zum Abgleiten an einer Gleitschiene oder an Schmalseiten weiterer Kettenlaschen ausgebildet ist. Mindestens eine der Breitseiten kann einen Zapfen und/oder eine Aufnahme zur Bildung von Gelenkverbindungen mit je einer nominalen Schwenkachse zwischen aufeinanderfolgenden Kettenlaschen aufweisen. Bei einer Ausführungsform der Erfindung kann die Funktionsschaltung direkt auf den einen Zapfen und/oder in die eine Aufnahme und/oder an mindestens eine der Schmalseiten angebracht bzw. aufgedruckt sein. Es können ggf. auch mehrere koaxiale Zapfen/Aufnahmen vorgesehen sein.

Die Erfindung betrifft dementsprechend auch ein Leitungsführungssystem, insbesondere für lange Verfahrwege, zum dynamischen Führen von Versorgungsleitungen zwischen zwei relativ zueinander beweglichen Anschlusspunkten, das eine Energieführungskette mit mindestens einer Kettenlasche gemäß einer der oben beschriebenen Ausführungsformen und/oder eine Führungsrinne für eine Energieführungskette mit mindestens einem Führungsbauteil gemäß einer der oben beschriebenen Ausführungsformen umfasst.

Das System umfasst vorzugsweise eine Auswerteschaltung, welche mit der Funktionsschaltung signaltechnisch, insbesondere lösbar bzw. austauschbar zur Signalübertragung über eine Leitung verbunden ist. Hierzu kann beispielsweise eine spezielle Kontaktschnittstelle zwischen Auswerteschaltung und Funktionsschaltung vorgesehen sein. Vorzugsweise umfasst das System ferner eine Energieversorgung, beispielsweise eine Batterie für die Auswerteschaltung.

Das Leitungsführungssystem kann eine mit der Auswerteschaltung verbundene Kontaktvorrichtung aufweisen, insbesondere eine Kontaktvorrichtung mit Federkontaktstiften, zur lösbaren Kontaktierung der Auswerteschaltung mit der Funktionsschaltung, insbesondere mit deren Kontaktbereichen. Das erleichtert einen Austausch der die Funktionsschaltung(en) aufweisenden Bauteile, insbesondere durch prädiktive Wartung. Die in der Herstellung aufwendigeren bzw. kostspieligeren Komponenten können so an einem nicht verschleißanfälligen Teil des Systems angeordnet werden.

Die Auswerteschaltung kann insbesondere mindestens einen Betriebsparameter anhand der Funktionsschaltung(en) auswerten und ein Kommunikationsmodul, insbesondere ein Funkkommunikationsmodul, umfassen, das zur Übermittlung eines Auswertungsergebnisses an ein übergeordnetes Überwachungssystem eingerichtet ist. Hierzu können beliebige bekannte drahtgebundene oder drahtlose Technologien zur Datenübertragung eingesetzt werden.

Ferner betrifft die Erfindung die Verwendung eines Kettenbauteils, insbesondere einer Kettenlasche, gemäß einer der oben beschriebenen Ausführungsformen und/oder eines Führungsbauteils gemäß einer der oben beschriebenen Ausführungsformen in einem Leitungsführungssystem zum dynamischen Führen von Versorgungsleitungen zwischen zwei relativ zueinander beweglichen Anschlusspunkten, um eine Verschleißerkennung, Erkennung eines Bruchs, Erkennung eines Versagens und/oder Erkennung des Abweichens vom Normalverlauf zu ermöglichen. Ein Leitungsführungssystem, das mit einem erfindungsgemäßen Kettenbauteil bzw. Führungsbauteil ausgerüstet ist, ist insbesondere für lange Verfahrwege, und hohe Verfahrgeschwindigkeiten, bei denen Reibung und andere mechanische Beanspruchungen auftreten, vorteilhaft.

Weitere Einzelheiten, Merkmale und Vorteile der Erfindung ergeben sich - ohne Beschränkung der Allgemeinheit der vorstehenden Lehre - aus der nachfolgenden, ausführlichen Beschreibung bevorzugter Ausführungsbeispiele anhand der beiliegenden Abbildungen. Hierbei zeigen:
**FIG.1****:** eine schematische Seitenansicht eines Ausführungsbeispiels eines Leitungsführungssystems;
**FIG.2A-2D****:** Ausführungsbeispiele einer Kettenlasche: perspektivisch (**FIG.2A**), in Seitenansicht (**FIG.2B**), und in Schnittansichten gem. **FIG.2B** (**FIG.2C-2D**);
**FIG.3A-3D****:** weitere Ausführungsbeispiele der Kettenlasche in Perspektivansicht; und
**FIG.4****:** eine Perspektivansicht eines Ausführungsbeispiels einer Gleitschiene für ein System nach **FIG.1****.**

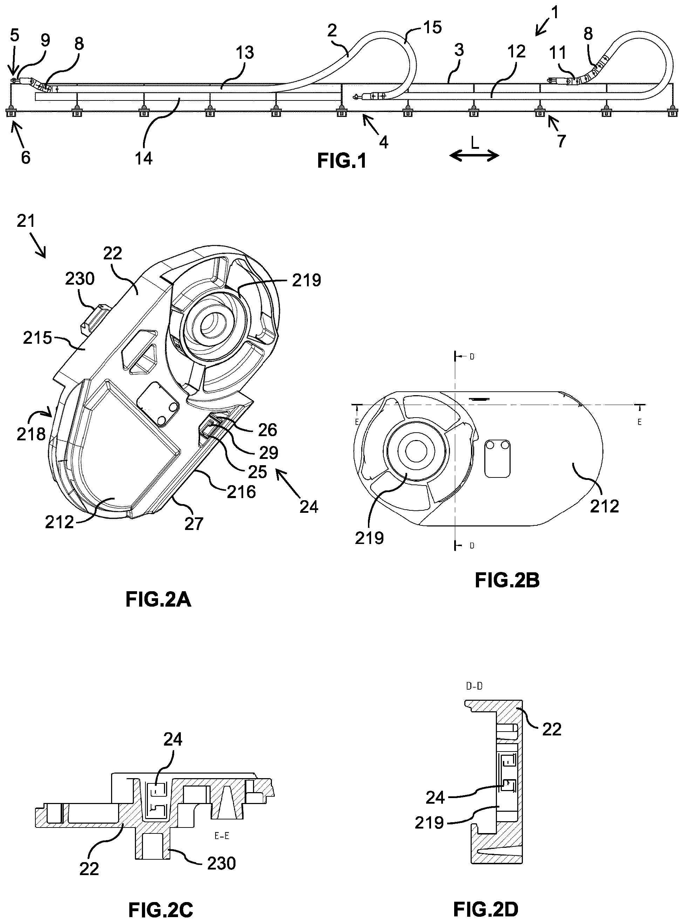

Das rein beispielhaft in FIG.1 gezeigte Leitungsführungssystem 1 umfasst eine Energieführungskette 2 und eine Führungsrinne 3 für die Energieführungskette 2. Die Energieführungskette 2 führt Versorgungsleitungen 9 von einem fest positionierten Anschlusspunkt 4 zu einem beweglichen Anschlusspunkt an einem Mitnehmer 5, bspw. an einem zu versorgenden Anlagenteil. Dabei verfährt die Energieführungskette 2 bestimmungsgemäß entlang ihres Verfahrwegs in Längsrichtung L zwischen zwei Endpositionen, hier mit 6 (links) und 7 (rechts) angedeutet, wobei dieselbe Energieführungskette 2 in FIG.1 zu Darstellungszwecken in beiden Endstellungen gezeigt ist.

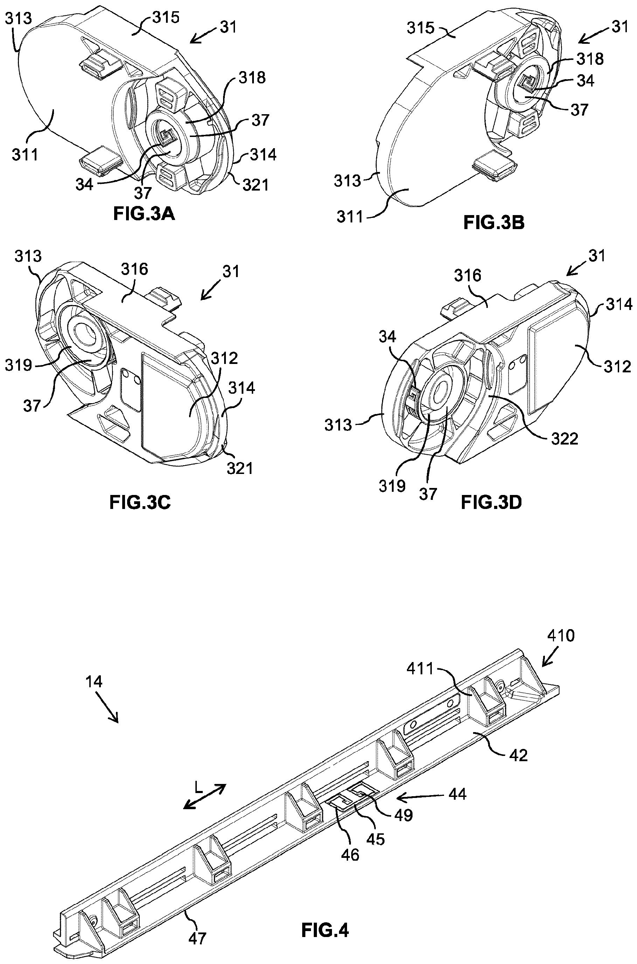

Die Führungsrinne 3 erstreckt sich in Längsrichtung L zumindest zwischen den Endpositionen 6 und 7 und ist über etwa eine Hälfte ihrer Länge zur ausgefahrenen Endposition 6 hin mit einer Anzahl fluchtender Gleitschienen 14 ausgerüstet. Die einzelne Gleitschiene 14 ist in FIG.4 näher gezeigt. Die Energieführungskette 2 bildet beim Verfahren einen Untertrum 12, einen Obertrum 13 und einen Umlenkbogen 15. Im dargestellten Ausführungsbeispiel verfährt die Energieführungskette 2 gleitend, d.h. der Obertrum 13 gleitet zunächst auf den Untertrum 12, wenn der Mitnehmer 5 sich zwischen dem Festpunkt 4 und der Endposition 7 befindet, oder aber auf den Gleitschienen 14, wenn der Mitnehmer 5 zwischen dem Festpunkt 4 und der ausgefahrenen Endposition 6 fährt.

Die Energieführungskette 2 ist aus zwei Laschensträngen aufgebaut, die in einer Querrichtung voneinander beabstandet sind und durch geeignete Querstege (nicht gezeigt) verbunden sind. Die Laschenstränge und die Querstege bilden einen Aufnahmeraum der Energieführungskette 2, in dem die geführten Versorgungsleitungen 9 aufgenommen sind. Die Laschenstränge sind aus miteinander verbundenen Kettenlaschen 11 aufgebaut, wobei jeweils zwei aufeinander folgenden Kettenlaschen 11 begrenzt gegeneinander schwenkbar sind.

FIG.2A-2D zeigen verschiedene Ansichten eines erfindungsgemäßen Ausführungsbeispiels einer Kettenlasche 21. Der Körper der Kettenlasche 21 ist als ein Formteil 22 aus Kunststoff ausgeführt, das aus einem Thermoplast im Spritzgussverfahren hergestellt ist. Die Kettenlasche 21 ist plattenförmig und hat zwei Breitseiten 211, 212 und vier Schmalseiten 213, 214, 215 und 216. Die Breitseiten 211, 212 verlaufen parallel zur Hauptebene der Kettenlasche 21, in der die Längsrichtung und senkrecht zur Längsrichtung L die Höhenrichtung liegt. Die Schmalseiten 215, 216 verlaufen in Längsrichtung L, die Schmalseiten 212, 213 verlaufen gekrümmt im Wesentlichen in die Höhenrichtung. Die Kettenlasche 21 weist ferner einen zylindrischen Zapfen 218 (vgl. FIG.3B) für eine Aufnahme 219 zur Bildung einer Gelenkverbindung mit einer weiteren Kettenlasche 21 desselben Laschenstrangs und einen Vorsprung 230, in Form einer Rastnase, zur Verbindung mit Querstegen. FIG.2C zeigt einen Schnitt durch den Vorsprung 230. FIG.2D zeigt einen Schnitt durch die Aufnahme 219.

Die Schmalseiten 215, 216 der Kettenlasche 21 weisen bestimmungsgemäß zum Abgleiten bestimmte Gleitflächen 27 auf. Beim Abgleiten des Obertrums 13 der aus den Kettenlaschen 21 aufgebauten Energieführungskette 2 auf der Gleitschiene 14, 44 bzw. auf dem Untertrum 12 gleiten die Gleitflächen 27 der Schmalseiten 216 der Kettenlaschen 21 an der Gleitfläche 47 der Gleitschiene 14, 44 bzw. an den Gleitflächen 27 der Kettenlaschen 21 des Untertrums 12. Besonders bei langen Verfahrwegen bzw. bei hohen Geschwindigkeiten sind die Gleitflächen 27 unvermeidbarem Verschleiß ausgesetzt. Mit steigender Nutzungsdauer kann durch übermäßigen Verschleiß eine Kettenlasche 21 beschädigt werden oder sogar brechen, was zum Bruch der Energieführungskette 2 und im schlimmsten Fall zum Bruch geführter Versorgungsleitungen 9 führen kann. Um dies zu vermeiden, ist mindestens eine Anzahl Kettenlaschen 21 der Energieführungskette 2 mit einer besonderen Funktionsschaltung 24 zur Verschleißerkennung ausgestattet.

Die Funktionsschaltung 24 ist erfindungsgemäß auf dem Körper der Kettenlasche 21, d.h. auf dem Kunststoff-Formteil 22, aufgebracht. Das Formteil 22 dient dabei als Schaltungsträger für die Funktionsschaltung 24.

Die Funktionsschaltung 24 weist eine Leiterbahnstruktur 25 auf, mit einem Detektionsbereich 26 und zwei Kontaktbereichen 29. Die Funktionsschaltung 24 ist passiv und als Zweipol ausgeführt und dient in diesem Bespiel einer resistiven Verschleißerkennung, nämlich durch Leiterunterbrechung. Sie besteht lediglich aus den Leiterbahnen des Detektionsbereichs 26 und der Kontaktbereichen 29. Der Detektionsbereich 26 ist als ein Abschnitt einer Leiterbahnstruktur, z.B. aus Silber oder Kupfer enthaltenden Partikeln, die durch 3D Druck auf das vorgefertigte Formteil 22 aufgedruckt wurden. Der Detektionsbereich 26 weist eine Schichtstärke von 5-100µm auf und eine Leiterbahnbreite von 0,5-5mm. Die Kontaktbereiche 29 wurden ebenfalls durch 3D-Druck auf das vorgefertigte Formteil 22 aufgedruckt, vorzugsweise in einem Schritt mit dem Aufdrucken des Detektionsbereichs 26. Die Kontaktbereiche 29 weisen jedoch eine größere Schichtstärke, insbesondere von 250-500pm, auf.

Das Leitungsführungssystem 1 umfasst ferner eine nicht dargestellte, geeignete Auswerteschaltung, die durch eine Kontaktvorrichtung mit Federkontaktstiften mit den Kontaktbereichen 29 der Funktionsschaltung 24 lösbar kontaktiert. So wird die Funktionsschaltung 24 zum Bestandteil der Auswerteschaltung. Die Verschleißerkennung funktioniert folgendermaßen: durch einen reibungsbedingten Verschleiß wird die Gleitfläche 27 bis zu einer bei der Konstruktion vorbestimmten Verschleißgrenze abgenutzt bzw. abgetragen, bis auch die Leiterbahn im Detektionsbereich 26, die die Verschleißgrenze markiert bzw. entlang der Verschleißgrenze verläuft, bis zur Leiterbahnunterbrechung beschädigt wird. So wird der Stromkreis unterbrochen und der kritische Verschleiß erkennbar. Auch andere z.B. induktive oder kapazitive Messprinzipien sind möglich.

FIG.3A-3D zeigen eine weitere Anordnung der Funktionsschaltung 34 an einer Kettenlasche 31. Die Kettenlasche 31 ist eine sog. gekröpfte Kettenlasche mit einem Zapfen 318 an einer Breitseite 311 und einer Aufnahme 320 an der gegenüberliegenden Breitseite 312, wobei Zapfen 318 und Aufnahme 320 aufeinanderfolgender Kettenlaschen 31 deren Gelenkverbindung bilden. Der Zapfen 318 und die Aufnahme 319 weisen zylindrische Bereiche mit Gleitflächen 37 auf. Beim Schwenken der beiden Kettenlaschen 31 gegeneinander gleiten die aneinander anliegenden zylindrischen Flächen des Zapfens 318 und der Aufnahme 319 aneinander, d.h. sind verschleißanfällig, insbesondere bei hohen Zugkräften d.h. vergleichsweise langen oder schnell fahrenden Energieführungsketten 1. Auch an den Gleitflächen 37 der Gelenkverbindung kann eine Funktionsschaltung 34 angeordnet werden, bspw. in einer Vertiefung an der Oberfläche der Aufnahme 319 oder des Zapfens 318, mit einem Abstand zur entsprechenden Gleitfläche 37. Der Aufbau der Funktionsschaltung 34 kann dabei FIG.2 entsprechen. Die Abnutzung dieser Gleitfläche 37 kann als eine Leiterbahnunterbrechung in der Funktionsschaltung 34 detektiert werden.

Auch weitere Ausführungsformen von Funktionsschaltungen liegen im Rahmen der Erfindung, bspw. mit einem kapazitiven, temperaturempfindlichen oder piezo-resistiven Detektionsbereich. Sie können bspw. zum Erkennen einer verschleißbedingten Änderung eines Abstandes bzw. einer relativen Anordnung zweier überlappenden Kettenlaschen 31 zu einander. Mit geeigneten Funktionsschaltungen an Kettenlaschen kann insbesondere ein auftretendes Spiel zwischen in einer Gelenkverbindung zwischen Zapfen 318 und Aufnahme 319, oder ein Spiel zwischen den Breitseiten 311, 312 der Kettenlaschen 31 im Überlappungsbereich erkannt werden, z.B. durch kapazitive oder induktive Messung, wie z.B. in WO 2019/201482 A1 beschrieben. Die entsprechende Lehre bzgl. elektrisch geeigneter Funktionsschaltungen und deren Anordnung aus WO 2019/201482 A1 wird insoweit hier mit einbezogen.

Auch die Schmalseiten 313, 314 können Gleitflächen aufweisen. Bei Kettenlaschen 31 nach FIG.3A-3D ist z.B. zur Seitenstabilisierung ein stirnseitiger, bogenförmiger Vorsprung 321 einer Kettenlasche 31 in eine entsprechende Aussparung bzw. Nut 322 einer überlappenden Kettenlasche 31 aufgenommen. Auch in diesem Bereich kann eine Funktionsschaltung 34 vorgesehen werden, z.B. um zu überwachen, dass kein seitliches Auseinanderbrechen auftritt.

FIG.4 zeigt eine Gleitschiene 14, z.B. für eine Führungsrinne 3 nach FIG.1. Die Gleitschiene 14 weist bestimmungsgemäß eine Gleitfläche 47 auf. Die Gleitschiene 14 ist im Betriebsposition in der Führungsrinne 3 so angeordnet, dass die Gleitfläche 47 eine abstützende Lauffläche für die Energieführungskette 2 bereitstellt. In der FIG.4 ist die Gleitschiene 14 perspektivisch von der Unterseite, die der Gleitfläche 47 abgewandt ist, gezeigt. Die Gleitschiene 14 hat einen in die Längsrichtung langgestreckten Körper, der als Formteil 42, vorzugsweise aus einem Tribopolymer, im Spritzgussverfahren hergestellt ist. Der Körper hat einen offenen Querschnitt, der als Winkelprofil ausgebildet ist. Der Körper verfügt über einen Befestigungsbereich 410 zur Befestigung an den Seitenteilen der Führungsrinne 3. Der Befestigungsbereich 410 weist hierzu Profilelemente 411 auf.

Das Formteil 42 dient erfindungsgemäß als Schaltungsträger für die Funktionsschaltung 44. In FIG.4 ist nur eine Funktionsschaltung 44 dargestellt. Die Gleitschiene 14 kann, je nach Baulänge, auch mehrere in die Längsrichtung voneinander beabstandete Funktionsschaltungen 44 aufweisen, zur Verschleißerkennung an verschiedenen Stellen entlang der Gleitschiene 14 und/oder Plausibilitätsprüfung. Die Funktionsschaltungen 44 sind an der Oberfläche 48 der Gleitschiene 14 angebracht, die der Gleitfläche 47 abgewandt ist. Die Funktionsschaltung 44 ist analog zu oben beschriebenen Funktionsschaltung 24 im Wesentlichen aus Leiterbahnen 45 und Kontaktbereichen 49 aufgebaut und funktioniert nach dem oben beschriebenen resistiven Prinzip. Jede Funktionsschaltung 44 kann dabei im Aufbau z.B. der Funktionsschaltung 24 aus FIG.2 entsprechen, mit einem bzgl. des Betriebsparameters sensitiven Detektionsbereich. Auch in der Funktionsschaltung 44 kann ergänzend oder alternativ ein kapazitives oder induktives Prinzip genutzt werden.

Die Funktionsschaltungen 24, 34, 44 aus FIG.2-4 umfassen dabei mindestens eine Leiterbahnstruktur 25, 35, die unmittelbar auf dem Formteil 22, 32 bzw. 42, das als Träger bzw. Substrat der Leiterbahnstruktur 25, 35 dient und vergleichsweise erheblich geringere Leitfähigkeit hat, durch ein geeignetes additives Fertigungsverfahren aufgebracht ist.

### Bezugszeichenliste

FIG. 1
   1 Leitungsführungssystem
   2 Energieführungskette
   3 Führungsrinne
   4 Festpunkt
   5 Mitnehmer
   6, 7 Endpositionen
   9 Versorgungsleitungen
   11 Kettenlasche
   12 Untertrum
   13 Obertrum
   15 Umlenkbogen
   14 Gleitschiene
   L Längsrichtung
FIG.2A-2D
   21 Kettenlasche
   22 Formteil
   24 Funktionsschaltung
   25 Leiterbahnstruktur
   26 Detektionsbereich
   29 Kontaktbereich
   27 Gleitflächen
   28 Vertiefung
   211, 212 Breitseiten
   213, 214, 215, 216 Schmalseiten
   218 (Gelenk-)Zapfen
   219 (Gelenk-)Aufnahme
   L Längsrichtung
FIG.3A-3D
   31 Kettenlasche
   34 Funktionsschaltung
   35 Leiterbahnstruktur
   37 Gleitflächen
   311, 312 Breitseite
   313, 314, 315, 316 Schmalseiten
   318 Zapfen
   319, 320 Aufnahme
   321 Vorsprung
   322 Nut
FIG.4
   14 Gleitschiene
   42 Formteil
   44 Funktionsschaltung
   47 Gleitfläche
   48 Oberfläche
   410 Befestigungsbereich
   411 Profilelemente

## Patentansprüche

1. Kettenbauteil, insbesondere Kettenlasche (11; 21; 31), für eine Energieführungskette (2), wobei das Kettenbauteil, insbesondere die Kettenlasche (11; 21; 31), ein aus Kunststoff gefertigtes, insbesondere im Spritzgussverfahren gefertigtes, Formteil (22; 32) umfasst, an welchem eine elektrische Funktionsschaltung (24; 34) mit Sensorfunktion zur Erfassung eines Betriebsparameters angeordnet ist, **dadurch gekennzeichnet, dass** die Funktionsschaltung (24; 34) mindestens eine Leiterbahnstruktur (25; 35) umfasst, die direkt auf dem Formteil (22; 32) ausgebildet ist und mit dem Formteil stoffschlüssig verbunden ist, wobei das Formteil (22; 32) selbst den Träger der Leiterbahnstruktur (25; 35) bildet, wobei die Funktionsschaltung (24; 34) insbesondere durch ein additives Fertigungsverfahren auf dem vorzugsweise vorgefertigten Formteil (22; 32) aus Kunststoff aufgebracht ist.

2. Führungsbauteil (14) einer Führungsrinne (3) eines Leitungsführungssystems (1) mit einer Energieführungskette (2) , insbesondere Gleitschiene oder Gleitleiste, wobei das Führungsbauteil (14) ein aus Kunststoff gefertigtes, insbesondere im Spritzgussverfahren gefertigtes, Formteil (42) umfasst, das eine Gleitfläche (47) für eine in der Führungsrinne (3) geführte Energieführungskette (2) aufweist, **dadurch gekennzeichnet, dass** an dem Formteil (42) mindestens eine elektrische Funktionsschaltung (44) mit Sensorfunktion zur Erfassung eines Betriebsparameters angeordnet ist, welche mindestens eine Leiterbahnstruktur (45) umfasst, die direkt auf dem Formteil (42) ausgebildet ist und mit dem Formteil stoffschlüssig verbunden ist, wobei das Formteil (22; 32) selbst den Träger der Leiterbahnstruktur (25; 35) bildet, wobei die Funktionsschaltung (44) insbesondere durch ein additives Fertigungsverfahren auf dem vorzugsweise vorgefertigten Formteil (42) aus Kunststoff aufgebracht ist.

3. Vorrichtung (11; 21; 31; 14) nach Anspruch 1 oder 2, **dadurch gekennzeichnet, dass** das Formteil (22; 32; 42) vorgefertigt ist und als Schaltungsträger, insbesondere als spritzgegossener Schaltungsträger, für die Funktionsschaltung (24; 34; 44) dient.

4. Vorrichtung (11; 21; 31; 14) nach einem der vorstehenden Ansprüche, **dadurch gekennzeichnet, dass** die Funktionsschaltung (24; 34; 44) einen bzgl. des Betriebsparameters sensitiven Detektionsbereich (26; 36; 46) umfasst, vorzugsweise wobei der Detektionsbereich zumindest teilweise entlang einer zu erkennenden Verschleißgrenze verläuft, sodass ein Überschreiten der Verschleißgrenze durch die Funktionsschaltung detektierbar ist.

5. Kettenlasche (11; 21; 31) nach Anspruch 1, wobei das Formteil (22; 32) an einer Schmalseite der Kettenlasche eine Gleitfläche (27; 37) zum Gleiten auf einer weiteren Kettenlasche (11; 21; 31) und/oder auf einer Gleitschiene (14) einer Führungsrinne (3) aufweist.

6. Vorrichtung nach Anspruch 4 und 5, **dadurch gekennzeichnet, dass** der Detektionsbereich in einem Neuzustand der Vorrichtung einen vordefinierten Abstand zur Gleitfläche aufweist, insbesondere an einer der Gleitfläche gegenüberliegenden Oberfläche vorgesehen ist.

7. Vorrichtung (11; 21; 31; 14) nach einem der vorstehenden Ansprüche, **dadurch gekennzeichnet, dass** die Funktionsschaltung (24; 34; 44) an einer Oberfläche (28; 38; 48) des Formteils (22; 32; 42) aufgebracht ist, insbesondere in die Oberfläche (28; 38; 48) integriert ist.

8. Vorrichtung nach einem der vorstehenden Ansprüche, **dadurch gekennzeichnet, dass** das Formteil eine vorgefertigte Vertiefung (28) aufweist, in welcher die Funktionsschaltung zumindest teilweise oder vollständig einliegt.

9. Vorrichtung nach einem der vorstehenden Ansprüche, **dadurch gekennzeichnet, dass** die Leiterbahnstruktur (25; 35) aus einem Material gefertigt ist, das eine deutlich höhere Leitfähigkeit aufweist, als der Kunststoff des Formteils, insbesondere aus einem Material mit Silber-, Kupfer- und/oder Carbon-Anteil.

10. Vorrichtung nach einem der vorstehenden Ansprüche, **dadurch gekennzeichnet, dass** die Leiterbahnstruktur (25; 35) Leiterbahnen umfasst, die durch ein AM-Verfahren additiv aufgebracht sind und eine erste Schichtstärke aufweisen, vorzugsweise eine erste Schichtstärke von ≤200µm, besonders bevorzugt von ≤100µm bei einer Leiterbreite von 0,5-5mm; sowie Kontaktbereiche (29; 39; 49) zur lösbaren Kontaktierung, die durch dasselbe AM-Verfahren additiv aufgebracht sind, und die eine zweite Schichtstärke, welche gegenüber der erste Schichtstärke deutlich grösser ist aufweisen, vorzugsweise eine zweite Schichtstärke von ≥200µm, insbesondere im Bereich von 250-500pm, vorzugsweise wobei die Funktionsschaltung passiv ausgeführt ist und insbesondere aus Leiterbahnen und Kontaktbereichen besteht und zur resistiven Verschleißerkennung, insbesondere durch Leiterunterbrechung, dient.

11. Vorrichtung nach einem der Ansprüche 1 bis 10, **dadurch gekennzeichnet, dass** die Funktionsschaltung einen induktiven, kapazitiven, temperaturempfindlichen oder piezo-resistiven Detektionsbereich umfasst, insbesondere einen Detektionsbereich zur Detektion einer Positionsänderung der Vorrichtung zu einer relativ zur Vorrichtung bewegenden weiteren Vorrichtung.

12. Vorrichtung nach einem der vorstehenden Ansprüche, insbesondere Führungsbauteil nach Anspruch 2, **dadurch gekennzeichnet, dass** das Formteil ein Tribopolymer umfasst, insbesondere aus einem Tribopolymer vorgefertigt ist, der ein Basispolymer und Festschmierstoffe und vorzugsweise Verstärkungsfasern und/oder Füllstoffe aufweist.

13. Führungsbauteil nach Anspruch 2, wobei das Führungsbauteil eine Gleitschiene für eine Führungsrinne einer Energieführungskette ist, mit einem in eine Längsrichtung langgestrecktem Körper und einem offenen Querschnitt senkrecht zur Längsrichtung, und insbesondere als Winkelprofil ausgebildet ist, wobei die Gleitschiene vorzugsweise eine Mehrzahl Funktionsschaltungen aufweist, die in eine Längsrichtung des Führungsbauteils voneinander beabstandet sind, besonders bevorzugt wobei diese einen Befestigungsbereich (410) zur Befestigung an einer Führungsrinne (3) umfasst, wobei der Befestigungsbereich (410) Profilelemente (411) zur Befestigung an einem Seitenteil der Führungsrinne aufweist.

14. Kettenlasche (11; 21; 31) nach einem der Ansprüche 1, oder 3 bis 12, mit zwei Breitseiten (211, 212; 311, 312) und vier Schmalseiten (213, 214, 215, 216; 313, 314, 315, 316), wobei mindestens eine der Schmalseiten (216; 316) zum Abgleiten auf einer Gleitschiene (14) oder Schmalseiten (216; 316) weiterer Kettenlaschen (11; 21;31) ausgebildet ist, und/oder wobei mindestens eine der Breitseiten (211, 212; 311, 312) mindestens einen Zapfen (218; 318) und/oder mindestens eine korrespondierende Aufnahme (220; 320) zur Bildung von Gelenkverbindungen mit je einer nominalen Schwenkachse zwischen aufeinanderfolgenden Kettenlaschen (11; 21; 31) aufweist, **dadurch gekennzeichnet, dass** die Funktionsschaltung (24; 34) an dem mindestens einen Zapfen (218; 318) und/oder an der mindestens einen Aufnahme (220; 320) und/oder an mindestens einer der Schmalseiten (216; 316) angebracht bzw. aufgedruckt ist.

15. System (1) mit einer Energieführungskette (2), insbesondere für lange Verfahrwege, zum dynamischen Führen von Versorgungsleitungen (9) zwischen zwei relativ zueinander beweglichen Anschlusspunkten (6, 7),
**dadurch gekennzeichnet, dass**
die Energieführungskette (2) mindestens eine Kettenlasche (11; 21; 31) nach einem der Ansprüche 1 oder 3 bis 12 und/oder das System (1) eine Führungsrinne (3) für eine Energieführungskette (2) mit mindestens einem Führungsbauteil (14) nach einem der Ansprüche 2 bis 4 oder 6 bis 13 umfasst, wobei das System (1) ferner eine Auswerteschaltung umfasst, welche mit der Funktionsschaltung (24; 34; 44) signaltechnisch, insbesondere lösbar, verbunden ist, vorzugsweise wobei das System (1) eine mit der Auswerteschaltung verbundene Kontaktvorrichtung, insbesondere mit Federkontaktstiften, zur lösbaren Kontaktierung der Auswerteschaltung mit der Funktionsschaltung (24; 34; 44) aufweist.

16. System (1) nach Anspruch 15, **dadurch gekennzeichnet, dass** die Auswerteschaltung mindestens einen Betriebsparameter anhand der Funktionsschaltung(en) (24; 34; 44) auswertet und ein Kommunikationsmodul umfasst, das zur Übermittlung eines Auswertungsergebnisses an ein übergeordnetes Überwachungssystem eingerichtet ist.

## Claims

1. Chain part, in particular a chain link plate (11; 21; 31), for an energy chain (2), wherein the chain part, in particular the chain link plate (11; 21; 31), comprises a formed part (22; 32) made of plastic, in particular made by injection molding, on which a functional electric circuit (24; 34) with a sensor function for acquisition of an operating parameter is arranged,
**characterized in that** the functional circuit (24; 34) comprises at least one trace conductor structure (25; 35), which is formed directly on the formed part (22; 32) and which is substance-to-substance bonded with the formed part (22; 32), wherein the formed part (22; 32) itself forms the carrier of the trace conductor structure (25; 35), wherein the functional circuit (24; 34) is applied in particular by an additive manufacturing method on the preferably pre-manufactured formed part (22; 32) made of plastic.

2. Guiding part (14) of a guide trough (3) of a line guiding system (1) with an energy chain (2), in particular a glide rail or glide strip, wherein the guiding part (14) includes a formed part (42) made of plastic, in particular made by injection molding, which comprises a glide surface (47) for an energy chain (2) guided in the guide trough (3),
**characterized in that** on the formed part (42) at least one functional electric circuit (44) with a sensor function for acquisition of an operating parameter is arranged, which includes at least one trace conductor structure (45), which is formed directly on the formed part (42) and which is substance-to-substance bonded with the formed part (42), wherein the formed part (22; 32) itself forms the carrier of the trace conductor structure (25; 35), wherein the functional circuit (44) is applied in particular by an additive manufacturing method on the preferably pre-manufactured formed part (42) made of plastic.

3. Device (11; 21; 31; 14) according to claim 1 or 2,
**characterized in that** the formed part (22; 32; 42) is pre-manufactured and acts as a circuit carrier, in particular as an injection-molded circuit carrier, for the functional circuit (24; 34; 44).

4. Device (11; 21; 31; 14) according to one of the preceding claims, **characterized in that** the functional circuit (24; 34; 44) comprises a detection region (26; 36; 46) that is sensitive to the operating parameter, wherein preferably the detection region extends at least partially along a wear limit to be detected such that an exceeding of the wear limit is detectable by the functional circuit.

5. Chain link plate (11; 21; 31) according to claim 1,
wherein the formed part (22; 32) comprises a glide surface (27; 37) on a narrow side of the chain link plate for gliding on a further chain link plate (11; 21; 31) and/or on a glide rail (14) of a guide trough (3).

6. Device according to claim 4 and 5, **characterized in that** the detection region is at a predefined distance from the glide surface in a new state of the device, and is in particular provided on a surface opposite the glide surface.

7. Device (11; 21; 31; 14) according to one of the preceding claims, **characterized in that** the functional circuit (24; 34; 44) is applied on a surface (28; 38; 48) of the formed part (22; 32; 42), and is in particular integrated into the surface (28; 38; 48).

8. Device according to one of the preceding claims, **characterized in that** the formed part comprises a pre-manufactured indentation (28) in which the functional circuit lies at least partially or completely.

9. Device according to one of the preceding claims, **characterized in that** the trace conductor structure (25; 35) is made of a material having significantly higher conductivity than the plastic of the formed part, in particular of a material with a silver, copper and/or carbon content.

10. Device according to one of the preceding claims,
**characterized in that** the trace conductor structure (25; 35) comprises trace conductors that are applied additively by an AM method and have a first layer thickness, preferably a first layer thickness of ≤200 µm, particularly preferably of ≤100 µm, with a conductor width of 0.5-5 mm; as well as contact regions (29; 39; 49) for a releasable contact, which are applied additively by the same AM method and which have a second layer thickness, which is significantly greater compared to the first layer thickness, preferably a second layer thickness of ≥200 µm, in particular in the range of 250-500 µm, wherein preferably
the functional circuit is of passive configuration and in particular consists of trace conductors and contact regions, and is used for resistive wear detection, in particular by a conductor interruption.

11. Device according to one of claims 1 to 10, **characterized in that** the functional circuit comprises an inductive, capacitive, temperature-sensitive or piezo-resistive detection region, in particular a detection region for detecting a change of position of the device relative to a further device that is moving relative to the device.

12. Device according to one of the preceding claims, in particular guiding part according to claim 2, **characterized in that** the formed part comprises a tribopolymer, and in particular is pre-manufactured from a tribopolymer, which comprises a base polymer and solid lubricants and preferably reinforcing fibers and/or fillers.

13. Guiding part according to claim 2, wherein the guiding part is a glide rail for a guide trough of an energy chain, with a body that is elongated in a longitudinal direction and an open cross-section perpendicular to the longitudinal direction, and is formed in particular as an angled profile,
wherein the glide rail preferably comprises a plurality of functional circuits that are spaced apart from each other in a longitudinal direction of the guiding part, wherein particularly preferably
the glide rail comprises a mounting region (410) for mounting on a guide trough (3), wherein the mounting region (410) comprises profile elements (411) for mounting on a side portion of the guide trough.

14. Chain link plate (11; 21; 31) according to one of claims 1, or 3 to 12, with two broad sides (211, 212; 311, 312) and four narrow sides (213, 214, 215, 216; 313, 314, 315, 316), wherein at least one of the narrow sides (216; 316) is formed for gliding on a glide rail (14) or narrow sides (216; 316) of further chain link plates (11; 21;31), and/or wherein at least one of the broad sides (211, 212; 311, 312) comprises at least one pin (218; 318) and/or at least one corresponding receptacle (220; 320) to form articulated joints each having a nominal pivot axis between consecutive chain link plates (11; 21; 31), **characterized in that** the functional circuit (24; 34) is attached or printed on the at least one pin (218; 318) and/or on the at least one receptacle (220; 320) and/or on at least one of the narrow sides (216; 316).

15. System (1) having an energy chain (2), in particular for long travel paths, for the dynamic guiding of supply lines (9) between two connection points (6, 7) that are movable relative to each other,
**characterized in that**
the energy chain (2) comprises at least one chain link plate (11; 21; 31) according to one of claims 1 or 3 to 12 and/or the system (1) comprises a guide trough (3) for an energy chain (2) having at least one guiding part (14) according to one of claims 2 to 4 or 6 to 13, wherein the system (1) furthermore comprises an evaluation circuit, which has a signaling connection, in particular a releasable connection, to the functional circuit (24; 34; 44), wherein preferably
the system (1) comprises a contact device connected to the evaluation circuit, in particular with spring contact pins, for a releasable contact of the evaluation circuit with the functional circuit (24; 34; 44) .

16. System (1) according to claim 15, **characterized in that** the evaluation circuit evaluates at least one operating parameter with the aid of the functional circuit(s) (24; 34; 44) and includes a communication module, which is set up to transmit an evaluation result to a higher-level monitoring system.

## Revendications

1. Élément de chaîne, en particulier plaque de chaîne (11 ; 21 ; 31), pour une chaîne de guidage d'énergie (2), l'élément de chaîne, en particulier la plaque de chaîne (11 ; 21 ; 31), comprenant une pièce moulée (22 ; 32) fabriquée en matière plastique, fabriquée en particulier par moulage par injection, sur laquelle est disposé un circuit de fonction électrique (24 ; 34) à fonction de capteur destiné à détecter un paramètre de fonctionnement, **caractérisé en ce que** le circuit de fonction (24 ; 34) comprend au moins une structure à pistes conductrices (25 ; 35) qui est conformée directement sur la pièce moulée (22 ; 32) et est reliée par liaison de matière avec la pièce moulée, la pièce moulée (22 ; 32) constituant elle-même le support de la structure à pistes conductrices (25 ; 35), le circuit de fonction (24 ; 34) étant appliqué en particulier selon un procédé de fabrication additif sur la pièce moulée (22 ; 32) préférentiellement préfabriquée en matière plastique.

2. Élément de guidage (14) d'une rainure de guidage (3) d'un système de guidage pour lignes (1) avec une chaîne de guidage d'énergie (2), en particulier une glissière ou une languette de glissement, l'élément de guidage (14) comprenant une pièce moulée (42) fabriquée en matière plastique, en particulier par moulage par injection, qui présente une surface de glissement (47) pour une chaîne de guidage d'énergie (2) guidée dans la rainure de guidage (3), **caractérisé en ce qu'**est disposé sur la pièce moulée (42) au moins un circuit de fonction électrique (44) à fonction de capteur destiné à détecter un paramètre de fonctionnement, comprenant au moins une structure à pistes conductrices (45) qui est conformée directement sur la pièce moulée (42) et est reliée par liaison de matière avec la pièce moulée, la pièce moulée (22 ; 32) constituant elle-même le support de la structure à pistes conductrices (25 ; 35), le circuit de fonction (44) étant appliqué en particulier selon un procédé de fabrication additif sur la pièce moulée (42) préférentiellement préfabriquée en matière plastique.

3. Dispositif (11 ; 21 ; 31 ; 14) selon la revendication 1 ou 2, **caractérisé en ce que** la pièce moulée (22 ; 32 ; 42) est préfabriquée et sert de support de circuit, en particulier de support de circuit moulé par injection, pour le circuit de fonction (24 ; 34 ; 44).

4. Dispositif (11 ; 21 ; 31 ; 14) selon l'une des revendications précédentes, **caractérisé en ce que** le circuit de fonction (24 ; 34 ; 44) comprend une zone de détection (26 ; 36 ; 46) sensible relativement au paramètre de fonctionnement, la zone de détection s'étendant préférentiellement au moins partiellement le long d'une limite d'usure à détecter, de sorte qu'un dépassement de la limite d'usure est détectable par le circuit de fonction.

5. Plaque de chaîne (11 ; 21 ; 31) selon la revendication 1, la pièce moulée (22 ; 32) présentant au niveau d'un chant de la plaque de chaîne une surface de glissement (27 ; 37) destinée à glisser sur une autre plaque de chaîne (11 ; 21 ; 31) et/ou sur une glissière (14) d'une rainure de guidage (3).

6. Dispositif selon les revendications 4 et 5, **caractérisé en ce que** la zone de détection présente, dans un état neuf du dispositif, un écart prédéfini avec la surface de glissement, est prévue en particulier au niveau d'une surface opposée à la surface de glissement.

7. Dispositif (11 ; 21 ; 31 ; 14) selon l'une des revendications précédentes, **caractérisé en ce que** le circuit de fonction (24 ; 34 ; 44) est appliqué sur une surface (28 ; 38 ; 48) de la pièce moulée (22 ; 32 ; 42), est en particulier intégré dans la surface (28 ; 38 ; 48).

8. Dispositif selon l'une des revendications précédentes, **caractérisé en ce que** la pièce moulée présente un creux préfabriqué (28), dans lequel le circuit de fonction est logé au moins partiellement ou complètement.

9. Dispositif selon l'une des revendications précédentes, **caractérisé en ce que** la structure à pistes conductrices (25 ; 35) est fabriquée dans un matériau qui présente une conductivité nettement plus élevée que la matière plastique de la pièce moulée, en particulier dans un matériau contenant une part d'argent, de cuivre et/ou de carbone.

10. Dispositif selon l'une des revendications précédentes, **caractérisé en ce que** la structure à pistes conductrices (25 ; 35) comprend des pistes conductrices qui sont appliquées de manière additive selon un procédé AM et présentent une première épaisseur de couche, préférentiellement une première épaisseur de couche de ≤200 µm, en particulier préférentiellement de ≤100 µm pour une largeur de conducteur de 0,5-5 mm ; ainsi que des zones de contact (29 ; 39 ; 49) destinées à une mise en contact amovible, qui sont appliquées de manière additive selon le même procédé AM et qui présentent une deuxième épaisseur de couche qui est nettement supérieure à la première épaisseur de couche, préférentiellement une deuxième épaisseur de couche de ≥200 µm, en particulier dans la plage de 250-500 µm, le circuit de fonction étant préférentiellement de conception passive et en particulier composé de pistes conductrices et de zones de contact et servant à la détection résistive de l'usure, en particulier par une coupure des conducteurs.

11. Dispositif selon l'une des revendications 1 à 10, **caractérisé en ce que** le circuit de fonction comprend une zone de détection inductive, capacitive, thermosensible ou piézorésistive, en particulier une zone de détection destinée à détecter une modification de la position du dispositif par rapport à un autre dispositif en mouvement par rapport au dispositif.

12. Dispositif selon l'une des revendications précédentes, en particulier élément de guidage selon la revendication 2, **caractérisé en ce que** la pièce moulée comprend un tribopolymère, est en particulier préfabriquée dans un tribopolymère qui présente un polymère de base et des lubrifiants solides et préférentiellement des fibres de renforcement et/ou des charges.

13. Élément de guidage selon la revendication 2, l'élément de guidage étant une glissière pour une rainure de guidage d'une chaîne de guidage de l'énergie, étant conformé avec un corps allongé dans un sens longitudinal et une section ouverte perpendiculairement au sens longitudinal et en particulier conçu comme profilé angulaire, la glissière présentant préférentiellement une pluralité de circuits de fonction, qui sont espacés entre eux dans un sens longitudinal de l'élément de guidage, la glissière présentant en particulier préférentiellement une zone de fixation (410) pour la fixation sur une rainure de guidage (3), la zone de fixation (410) présentant des éléments profilés (411) pour la fixation sur un élément latéral de la rainure de guidage.

14. Plaque de chaîne (11 ; 21 ; 31) selon l'une des revendications 1 ou 3 à 12, avec deux faces (211, 212 ; 311, 312) et quatre chats (213, 214, 215, 216 ; 313, 314, 315, 316), au moins un des chants (216 ; 316) étant conformé pour glisser sur une glissière (14) ou des chants (216 ; 316) d'autres plaques de chaîne (11 ; 21 ;31), et/ou au moins une des faces (211, 212 ; 311, 312) présentant au moins un pivot (218 ; 318) et/ou au moins un logement correspondant (220 ; 320) en vue de constituer des liaisons articulées avec chacune un axe de pivotement nominal entre des plaques de chaîne successives (11 ; 21 ; 31), **caractérisé en ce que** le circuit de fonction (24 ; 34) est fixé ou appliqué par impression sur le au moins un pivot (218 ; 318) et/ou sur le au moins un logement (220 ; 320) et/ou sur au moins un des chants (216 ; 316).

15. Système (1) avec une chaîne de guidage de l'énergie (2), en particulier pour de longs déplacements, pour le guidage dynamique de conduites d'approvisionnement (9) entre deux points de raccordement (6, 7) mobiles l'un par rapport à l'autre, **caractérisé en ce que** la chaîne de guidage de l'énergie (2) comprend au moins une plaque de chaîne (11 ; 21 ; 31) selon l'une des revendications 1 ou 3 à 12 et/ou que le système (1) comprend une rainure de guidage (3) pour une chaîne de guidage de l'énergie (2) avec au moins un élément de guidage (14) selon l'une des revendications 2 à 4 ou 6 à 13, le système (1) comprenant en outre un circuit d'évaluation, lequel est relié au circuit de fonction (24 ; 34 ; 44) par technique de signalisation, en particulier de manière amovible, le système (1) présentant préférentiellement un dispositif de contact relié au circuit d'évaluation, en particulier avec des tiges de contact à ressort pour la mise en contact amovible du circuit d'évaluation avec le circuit de fonction (24 ; 34 ; 44).

16. Système (1) selon la revendication 15, **caractérisé en ce que** le circuit d'évaluation évalue au moins un paramètre de fonctionnement sur la base du(des) circuit(s) de fonction (24 ; 34 ; 44) et comprend un module de communication qui est configuré pour la transmission d'un résultat d'évaluation à un système de surveillance de niveau supérieur.
